# EUROPÄISCHE PATENTSCHRIFT

(11) **EP 2 752 319 B1**
(45) Veröffentlichungstag und Bekanntmachung des Hinweises auf die Patenterteilung: **01.11.2017**
(21) Anmeldenummer: 13184551.3
(22) Anmeldetag: 16.09.2013
(51) Int. Cl.: B60H 1/28

(54) **Wasserkasten für ein Kraftfahrzeug**
Water chamber for a motor vehicle
Réservoir d'eau pour un véhicule automobile

(43) Veröffentlichungstag der Anmeldung: 09.07.2014
(73) Patentinhaber: Weidplas GmbH, 8700 Küsnacht (CH)
(72) Erfinder: Cianelli, Colin, 8047 Zürich (CH); Bölsteri, Christian, 8635 Dürnten (CH); Dal Vecchio, Piero, 8734 Ermenswil (CH); Müller, Armin, 8722 Kaltbrunn (CH)
(74) Vertreter: Rutz, Andrea

(56) Entgegenhaltungen:
- EP-A1- 2 650 155
- DE-B3-102004 051 198
- FR-A- 1 280 008
- FR-A1- 2 878 809

## Beschreibung

Die Erfindung betrifft einen Wasserkasten für ein Kraftfahrzeug.

Wasserkästen dieser Art werden bei Kraftfahrzeugen insbesondere unterhalb der Motorschutzhaube angeordnet und dienen dazu, für die Klimatisierung des Fahrzeuginneren Frischluft aus der Umgebung bereitzustellen. Beispielsweise bei Regen ist die angesaugte Frischluft mit Wassertropfen beladen. Zudem kann durch die Ansaugöffnung Schwallwasser in den Wasserkasten eintreten. Damit der Klimaanlage möglichst trockene Luft zugeführt werden kann, sollen im Wasserkasten sowohl Schwallwasser als auch Wassertropfen bzw. Aerosole aus der Frischluft möglichst wirkungsvoll in die Wasserablauföffnung in der Bodenwand geleitet und dort abgeführt werden. Der Wirkungsgrad der Wasserabscheidung sollte möglichst hoch sein, so dass möglichst wenig Wassertropfen in das Fahrzeuginnere und insbesondere in den Luftfilter der Klimaanlage gelangen. Ein zunehmend wichtiger Aspekt eines solchen Wasserkastens ist der Energieaufwand, der erforderlich ist, um der Klimaanlage Frischluft bereitzustellen. In der Regel wird die Frischluft mittels eines Gebläses angesaugt. Der Energieverbrauch ist insbesondere abhängig vom Widerstand, den die angesaugte Frischluft im Wasserkasten erfährt. Durch eine Vergrösserung des Wasserkastens kann dieser Widerstand verkleinert werden. Dem steht jedoch die Anforderung gegenüber, nach welcher das Bauvolumen eines Wasserkastens möglichst klein sein sollte.

Ein Wasserkasten der genannten Art ist im Stand der Technik durch die DE-C-199 23 193 bekannt geworden. Um den Wirkungsgrad der Wasserabscheidung zu verbessern, ist in der Umlenkkammer oberhalb der Luftaustrittsöffnung ein luftdurchlässiger Dachkörper angeordnet. Dieser liegt einerseits an einer Rückwand und andererseits an einer Vorderwand an und bildet mit Seitenwänden Strömungsöffnungen. Am Dachkörper, der hier das Umlenkorgan bildet, wird die durch den Wasserkasten durchströmende Luft mit zwei quer zueinander orientierten Richtungen umgelenkt. Der hohe Wirkungsgrad soll dadurch erreicht werden, dass die meisten der in der Frischluft mitgeführten Wassertropfen der doppelten Umlenkung am Dachkörper nicht folgen können. Es wird angenommen, dass aufgrund ihrer Massenträgheit die Wassertropfen nach unten in die Wasserablauföffnung gelangen.

Durch die DE-B-10 2004 051 198 ist ein Wasserkasten bekannt geworden, der aus einer Wasserabscheidekammer und einer Tropfenabscheidekammer besteht. In der Wasserabscheidekammer soll vor allem Schwallwasser und in der Tropfenabscheidekammer aus der Luft Tropfen abgeschieden werden. Ein Wasserkasten mit zwei Kammern ist in der Herstellung vergleichsweise aufwendig und besitzt ein vergleichsweise grosses Bauvolumen. Der Widerstand und damit der Energieverbrauch dürften hier vergleichsweise hoch sein.

In EP 2650155 A1 wird ein Wasserkasten beschrieben, in welchem die durch eine Vorderwand einströmende und durch eine Rückwand ausströmende Luft in horizontaler Richtung von einem Umlenkorgan umgelenkt wird. Das Umlenkorgan erstreckt sich dabei in vertikaler Richtung von der Deckenwand zur Bodenwand des Wasserkastens.

Der Erfindung liegt die Aufgabe zugrunde, einen Wasserkasten der genannten Art zu schaffen, der eine Wasserabscheidung mit hohem Wirkungsgrad ermöglicht, und der dennoch mit vergleichsweise kleinem Bauvolumen hergestellt werden kann. Zudem soll der Wasserkasten einen vergleichsweise kleinen Widerstand aufweisen und damit im Gebrauch einen vergleichsweise kleinen Energieverbrauch gewährleisten.

Zur Lösung dieser Aufgabe wird ein Wasserkasten vorgeschlagen, wie er in Anspruch 1 angegeben ist. Vorteilhafte Ausgestaltungen der Erfindung sind in den abhängigen Ansprüchen angegeben.

Die vorliegende Erfindung stellt also einen Wasserkasten für ein Kraftfahrzeug zur Verfügung, mit einer Umlenkkammer, die eine Deckenwand, eine Bodenwand mit einer Wasserablauföffnung, eine Lufteintrittsöffnung und eine Luftaustrittsöffnung aufweist. In der Umlenkkammer ist ein Umlenkorgan angeordnet, an dem durch die Lufteintrittsöffnung einströmende und mit Wassertropfen beladene Luft umgelenkt wird. Das Umlenkorgan erstreckt sich im Wesentlichen von der Deckenwand zur Bodenwand, bevorzugt von der Deckenwand zu Bodenwand. Die Lufteintrittsöffnung ist in der Deckenwand und die Luftaustrittsöffnung in der Deckenwand und/oder in einer Rückwand angeordnet. Zwischen wenigstens einer Seitenwand der Umlenkkammer und einer Seitenkante des Umlenkorgans ist eine Strömungsöffnung angeordnet.

Beim erfindungsgemässen Wasserkasten strömt die Luft somit im Wesentlichen in horizontaler Richtung am Umlenkorgan vorbei. Die in die Umlenkkammer strömende Frischluft wird bevorzugt im Bereich der Lufteintrittsöffnung von einer im Wesentlichen vertikalen Strömungsrichtung in eine zumindest teilweise horizontale Strömungsrichtung umgelenkt. Am Umlenkorgan wird die einströmende Frischluft umgelenkt und die umgelenkte Luft gelangt in die Luftaustrittsöffnung. Im Bereich der Lufteintrittsöffnung, insbesondere im Bereich unterhalb der Lufteintrittsöffnung, sowie an der Vorderseite des Umlenkorgans wird Schwallwasser umgelenkt und zur Wasserablauföffnung geleitet. Beim jeweiligen Umlenken des Luftstroms werden gleichzeitig Wassertropfen aus der Luft abgeschieden, und diese gelangen aufgrund ihrer Massenträgheit nach unten, insbesondere auf die Bodenwand, und ebenfalls in die genannte Wasserablauföffnung. Aufgrund dieser zumindest zweifachen Umlenkung des Luftstroms wird eine Wasserabscheidung mit hohem Wirkungsgrad erreicht. Nach einer Weiterbildung der Erfindung erstreckt sich das Umlenkorgan im Wesentlichen in vertikaler Richtung. Bevorzugt ist das Umlenkorgan in Luftstromrichtung zwischen der Lufteintrittsöffnung und der Luftaustrittsöffnung angeordnet.

Gemäss einer Weiterbildung der Erfindung ist der Wasserkasten, insbesondere die Umlenkkammer, derart ausgebildet, dass die Richtung der Luftströmung in der Lufteintrittsöffnung im Wesentlichen senkrecht zur Strömungsrichtung der Luft beim Auftreffen auf das Umlenkorgan steht. Mit anderen Worten erfährt die Luft in der Umlenkkammer vor dem Auftreffen auf das Umlenkorgan eine Umlenkung um ca. 90°.

Vorteilhaft ist in der Umlenkkammer im Bereich der Strömungsöffnung zumindest eine Leitstruktur vorgesehen, um Luft, welche die Umlenkkammer durchströmt, um die Seitenkante des Umlenkorgans herum zu leiten. Dank der Leitstruktur werden Verwirbelungen des Luftstroms, welche beispielsweise im Bereich der Seitenkante des Umlenkorgans entstehen, verringert oder sogar weitgehend eliminiert. Anstatt zu verwirbeln wird die Luft entlang der Leitstruktur um die Seitenkante des Umlenkorgans herumgeführt. Dadurch, dass Verwirbelungen verringert oder sogar weitgehend vermieden werden können, ergibt sich für die den Wasserkasten durchströmende Luft eine wesentliche Verkleinerung des Widerstandes. Dies führt zu einem verringerten Energieverbrauch durch das Luftfördermittel, mittels welchem die Frischluft angesaugt wird.

Die Luft kann insbesondere dann besonders gut um die Seitenkante des Umlenkorgans herum geleitet werden, wenn die Leitstruktur, falls vorhanden, zumindest teilweise luftstromabwärts bezüglich des Umlenkorgans angeordnet ist. Bevorzugt erstreckt sich die Leitstruktur im Wesentlichen von der Deckenwand zur Bodenwand, bevorzugter von der Deckenwand zur Bodenwand, wodurch die Luftstromleitung um das Umlenkorgan herum auf besonders wirbelfreie und somit widerstandsarme Art und Weise erfolgen kann. Die Leitstruktur erstreckt sich bevorzugt im Querschnitt über einen Winkelbereich von mindestens 90° und insbesondere von höchstens 180° um die Seitenkante des Umlenkorgans herum. Die Leitstruktur weist dabei in der Regel eine gekrümmte Innenfläche sowie eine gleichsinnig wie die Innenfläche gekrümmte Aussenfläche auf. Falls eine Leitstruktur vorhanden ist, ist diese zudem bevorzugt im Querschnitt sichelförmig. Sie weist somit bevorzugt eine Innenfläche mit einem inneren Radius sowie eine Aussenfläche mit einem im Vergleich zum inneren Radius grösseren äusseren Radius auf. Eine sichelförmige Leitstruktur ist deshalb vorteilhaft, weil sie einen Luftstrom in der Regel zuerst langsam aufteilt, um ihn einerseits entlang der Innenfläche und andererseits entlang der Aussenfläche um das Umlenkorgan herum zuleiten, und ihn schliesslich wieder langsam zusammenzuführt, ohne dass dabei starke Verwirbelungen auftreten. Diese Form der Leitstruktur kann zudem auch einen Coandä-Effekt bewirken, dank dem der Luftstrom besonders wirksam um das Umlenkorgan herum geleitet wird. Um möglichst wenige Verwirbelungen zu verursachen, sind die Innenfläche und die Aussenfläche der Leitstruktur jeweils bevorzugt frei von lokalen Erhebungen und Vertiefungen. Die Innenfläche der Leitstruktur ist üblicherweise der Seitenkante der Umlenkstruktur zugewandt.

Im Falle, dass der Wasserkasten eine Leitstruktur aufweist, ist diese bevorzugt beabstandet zum Umlenkorgan und/oder beabstandet zu den Seitenwänden der Umlenkkammer angeordnet. Im Bereich der Strömungsöffnung ist bevorzugt zwischen der Leitstruktur und der Seitenkante des Umlenkorgans ein innerer Luftdurchlass vorgesehen und zwischen der Leitstruktur und der Seitenwand der Umlenkkammer ein äusserer Luftdurchlass. Der äussere Luftdurchlass ist bevorzugt im Vergleich zum inneren Luftdurchlass grösser dimensioniert. Im Bereich der Leitstruktur weisen der innere Luftdurchlass und der äussere Luftdurchlass jeweils bevorzugt einen bezüglich Fläche und Form im Wesentlichen konstanten Querschnitt auf. Der innere Luftdurchlass weist vorteilhaft eine luftstromabwärts angeordnete Auslassöffnung auf, welche im Wesentlichen in Richtung zur Wasserablauföffnung hin gerichtet ist.

Der Wasserkasten bewirkt insbesondere dann einen geringen Widerstand, wenn die Luftaustrittsöffnung in der Rückwand angeordnet ist, da dann die Luft beim Durchströmen der Umlenkkammer weniger oft umgelenkt werden muss. Andererseits kann mittels Anordnen der Luftaustrittsöffnung in der Deckenwand eine zusätzliche Luftumlenkung in der Umlenkkammer bewirkt werden, wodurch die Wasserabscheidung verbessert wird.

Der Wirkungsgrad der Wasserabscheidung ist dann besonders hoch, wenn die Wasserablauföffnung zwischen dem Umlenkorgan und der Rückwand angeordnet ist. Die Wasserablauföffnung befindet sich dann somit auf der Leeseite des Umlenkorgans. Falls die Leitstruktur einen zumindest teilweise luftstromabwärts bezüglich des Umlenkorgans angeordneten Teil aufweist, erstreckt sich dieser Teil vorteilhaft in Richtung zur Wasserablauföffnung hin, so dass das die Leitstruktur umströmende Wasser und/oder die Leitstruktur umströmende Luft im Wesentlichen zur Wasserablauföffnung hingeleitet wird.

Vorteilhaft weist das Umlenkorgan im Querschnitt eine Dicke auf, welche in einem angrenzend zur Strömungsöffnung angeordneten Bereich des Umlenkorgans zur Seitenkante hin um ein Vielfaches und insbesondere kontinuierlich zunimmt. Dieser Bereich stellt insbesondere eine sich in die vertikale Richtung erstreckende, wulstartige Verdickung des Umlenkorgans im Bereich der Seitenkante dar. Die Seitenkante wird dann bevorzugt durch die Verdickung gebildet. Durch diese Verdickung des Umlenkorgans können ein Strömungsabriss und somit Luftverwirbelungen im Bereich der Seitenkante vermieden werden. Die Verdickung kann insbesondere im Querschnitt zumindest teilkreisförmig ausgebildet sein, wobei sich der kreisförmige Bereich über einen Winkelbereich von bevorzugt mindestens 180, insbesondere bevorzugt mindestens 270°, erstreckt.

Gemäss einer Weiterbildung der Erfindung weist der Wasserkasten einen Einlassstutzen auf, welcher in die Lufteintrittsöffnung der Umlenkkammer mündet, wobei zwischen Einlassstutzen und Umlenkkammer bevorzugt ein gerundet ausgebildeter Übergangsbereich vorgesehen ist. Experimente haben gezeigt, dass das Vorhandensein eines Einlassstutzens, der insbesondere eine kreisrunde Querschnittsfläche aufweist, den Luftwiderstand verringert, welcher der Wasserkasten auf die durchströmende Luft ausübt. Ein gerundet ausgebildeter Übergangsbereich verhindert einen Strömungsabriss und damit zusammenhängende Luftverwirbelungen im Bereich der Lufteintrittsöffnung.

Eine weitere Erhöhung des Wirkungsgrades der Wasserabscheidung wird dann erreicht, wenn das Umlenkorgan eine zweite Seitenkante aufweist, die mit einer zweiten Seitenwand der Umlenkkammer eine zweite Strömungsöffnung bildet. Die erste und die zweite Strömungsöffnung sind vorzugsweise im Wesentlichen symmetrisch angeordnet, so dass die in die Umlenkkammer einströmende Frischluft symmetrisch aufgeteilt wird. Das Umlenkorgan ist hier insbesondere giebeldachförmig ausgebildet. Der First des Giebeldaches erstreckt sich dann im Wesentlichen vertikal. Die beiden Teile des Giebeldaches sind vorzugsweise an der Vorderseite konkav ausgebildet. Bevorzugt ist bei einer derartigen Ausführungsform mit einer zweiten Seitenkante und einer zweiten Strömungsöffnung in der Umlenkkammer nicht nur im Bereich der ersten Strömungsöffnung eine erste Leitstruktur vorhanden, sondern auch im Bereich der zweiten Strömungsöffnung eine zweite Leitstruktur. Diese zweite Leitstruktur dient zum Herumleiten von Luft, welche die Umlenkkammer durchströmt, um die zweite Seitenkante des Umlenkorgans. Falls eine erste und eine zweite Leitstruktur vorhanden sind, sind diese vorzugsweise im Wesentlichen symmetrisch zueinander ausgestaltet und angeordnet, so dass insbesondere die beiden vom Umlenkorgan aufgeteilten Luftströme von den beiden Leitstrukturen um die jeweilige Seitenkante herum und rückseitig in Bezug auf das Umlenkorgan wieder zusammengeführt werden.

In einer bevorzugten Ausführungsform bilden bzw. begrenzen die Umlenkkammer und das Umlenkorgan gemeinsam zumindest einen ersten Luftkanal sowie einen getrennt vom ersten Luftkanal verlaufenden zweiten Luftkanal. Der erste und der zweite Luftkanal erstrecken sich insbesondere jeweils entlang einer der Seitenwände und sind durch das Umlenkorgan voneinander getrennt. Insbesondere bevorzugt weisen der erste Luftkanal und der zweite Luftkanal jeweils einen bezüglich Fläche und Form im Wesentlichen konstanten Strömungsquerschnitt auf. Auf diese Weise kann eine möglichst laminare, d.h. verwirbelungsfreie Strömung in den beiden Luftkanälen gewährleistet werden. Der erste Luftkanal erstreckt sich dabei vorteilhaft im Wesentlichen von der Lufteintrittsöffnung bis zur ersten Strömungsöffnung, und der zweite Luftkanal vorteilhaft im Wesentlichen von der Lufteintrittsöffnung bis zur zweiten Strömungsöffnung.

Nach einer Weiterbildung der Erfindung ist vorgesehen, dass die Bodenwand so konisch ausgebildet ist, dass sich die Wasserablauföffnung an einer untersten Stelle der Bodenwand befindet. Das Schwallwasser und das aus der Luft ausgeschiedene Wasser gelangen dann besonders effizient zur Wasserablauföffnung.

Nach einer Weiterbildung der Erfindung ist vorgesehen, dass die Umlenkkammer wenigstens teilweise zwischen Wänden gerundete Kanten aufweist. Damit kann der Widerstand und damit der Energieverbrauch weiter gesenkt werden. Gerundete Kanten und/oder Übergangsbereiche können insbesondere einen Coandä-Effekt bewirken. Vorteilhaft sind insbesondere die Übergangsbereiche zwischen der Vorderwand und den Seitenwänden und/oder zwischen den Seitenwänden und der Rückwand jeweils gerundet ausgebildet. Falls eine oder mehrere Leitstrukturen vorhanden sind, sind die Übergangsbereiche zwischen den Seitenwänden und der Rückwand vorteilhaft jeweils gleichsinnig gekrümmt ausgebildet, wie die vom Umlenkorgan abgewandte(n) Aussenfläche(n) der Leitstruktur(en). Die Übergangsbereiche zwischen den Seitenwänden und der Rückwand erstrecken sich zudem insbesondere jeweils im Wesentlichen parallel zu der dem jeweiligen Übergangsbereich zugewandten Aussenfläche der allfällig vorhandenen Leitstruktur. Gerundete Übergangsbereiche können auch zwischen der Vorderwand, den Seitenwänden, der Rückwand und der Deckenwand sowie der Vorderwand, den Seitenwänden, der Rückwand und der Bodenwand vorgesehen sein.

Das Umlenkorgan kann wenigstens ein Teil aufweisen, das zwischen einer ersten und einer zweiten Position verstellbar ist, wobei dieses Teil in der ersten Position zur Wasserabscheidung strömende Luft umlenkt und in der zweiten Position einen Durchgang freigibt, so dass die Luft möglichst ungehindert die Umlenkkammer durchströmen kann. Ist die Umgebungsluft trocken, beispielsweise bei regenfreiem Wetter im Sommer, so ist eine Wasserabscheidung im Wasserkasten nicht erforderlich. In diesem Fall ist wenigstens ein Teil des Umlenkorgans in einer Position, in der es der durchströmenden Luft keinen Widerstand bietet. Dieses Teil ist beispielsweise eine Wandung, die in der zweiten Position parallel zur Durchströmrichtung ausgerichtet ist. Dieses wenigstens eine Teil kann insbesondere um eine im Wesentlichen vertikale Achse verschwenkbar sein. Vorzugsweise sind zwei Teile vorgesehen, die das Umlenkorgan bilden und die zwischen zwei Positionen verschwenkbar sind. In der einen Position bilden sie das Umlenkorgan, an dem wie oben erläutert Wasser aus der Frischluft abgeschieden wird. In der anderen Position sind diese beiden Teile so verschwenkt, dass diese im Wesentlichen keine Umlenkung der durchströmenden Luft bewirken. Nach einer Weiterbildung der Erfindung sind die beiden Teile ähnlich einer Flügeltür spiegelbildlich zueinander verschwenkbar. Falls eine oder mehrere Leitstrukturen vorhanden sein sollten, können diese, müssen aber nicht, mit einem jeweiligen Teil des Umlenkorgans mitverschwenkbar sein. Das wenigstens eine bewegliche Teil des Umlenkorgans kann beispielsweise mittels eines Feuchtigkeitssensors gesteuert sein. Das genannte Teil ist dann beispielsweise so gesteuert, dass dieses in eine inaktive Position weggeschwenkt wird, wenn der Feuchtigkeitsgehalt unter einen vorbestimmten Wert fällt. Überschreitet der Feuchtigkeitswert die genannte Grenze, so wird das genannte Teil wieder in die aktive bzw. umlenkende Position bewegt, beispielsweise verschwenkt.

Nach einer Weiterbildung der Erfindung ist vorgesehen, dass wenigstens eine Seitenkante des Umlenkorgans sowie, falls vorhanden, die Leitstruktur, insbesondere deren Innen- und/oder Aussenfläche, gemäss dem Coandä-Effekt gerundet sind. Dadurch wird das abzuscheidende Wasser und/oder die Luft besonders wirksam um das Umlenkorgan herum geleitetet und insbesondere das Wasser wirksam in die Wasserablauföffnung geleitet. Mit diesem Effekt kann insbesondere eine verbesserte Umlenkung erreicht und ein unerwünschter Strömungsabriss vermieden werden.

Nach einer Weiterbildung der Erfindung liegen das Umlenkorgan und/oder, falls vorhanden, die Leitstruktur mit ihren jeweiligen Oberseiten an der Deckenwand und/oder mit ihren jeweiligen Unterseiten an der Bodenwand an oder sind unmittelbar mit der Deckenwand und/oder Bodenwand verbunden. Bevorzugt liegen das Umlenkorgan und/oder die evtl. vorhandene Leitstruktur mit ihren jeweiligen Oberseiten durchgehend an der Deckenwand an oder sind durchgehend unmittelbar mit der Deckenwand verbunden, d.h. es gibt zwischen dem Umlenkorgan bzw. Leitstruktur und der Deckenwand keinen Spalt bzw. keine Durchbrechungen. Alternativ oder zusätzlich liegen das Umlenkorgan und/oder die allfällige Leitstruktur mit ihren jeweiligen Unterseiten bevorzugt durchgehend an der Bodenwand an oder sind durchgehend unmittelbar mit der Bodenwand verbunden. Dadurch wird in den decken- bzw. bodennahen Bereichen sämtliche vorbeiströmende Frischluft am Umlenkorgan umgelenkt bzw. von der Leitstruktur um das Umlenkorgan herum geleitet. Wenn das Umlenkorgan bzw. die Leitstruktur sowohl durchgehend an der Deckenwand als auch durchgehend an der Bodenwand anliegen bzw. unmittelbar mit diesen Wänden verbunden sind, wird sogar sämtliche eintretende Frischluft am Umlenkorgan bzw. an der Leitstruktur umgelenkt und gelangt erst danach in die Luftaustrittsöffnung. An der Vorderseite des Umlenkorgans wird dabei sämtliches Schwallwasser umgelenkt und zur Wasserablauföffnung geleitet. In alternativen Ausgestaltungen ist es aber auch denkbar, dass die Oberseite und/oder Unterseite des Umlenkorgans und/oder der allfälligen Leitstruktur zumindest bereichsweise zur Deckenwand bzw. Bodenwand beabstandet ist. Dabei kann das Umlenkorgan bzw. die Leitstruktur an seiner/ihrer Oberseite und/oder Unterseite z.B. auch seitlich mit mindestens einer der Seitenwände verbunden sein, ohne dass eine unmittelbare Verbindung zwischen dem Umlenkorgan und der Deckenwand bzw. Bodenwand besteht.

Nach einer Weiterbildung der Erfindung ist auf der Oberseite der Bodenwand zumindest ein Steg angebracht, um Wasser, welches sich am Boden ansammelt, zur Wasserablauföffnung zu leiten.

Die Oberflächen der Umlenkkammer, des Umlenkorgans und/oder der Leitstruktur, falls vorhanden, sind vorteilhaft nicht vollständig glatt ausgebildet, was bedeutet, dass sie eine Oberflächenrauheit Ra von mindestens 1 Mikrometer aufweisen. Die Oberflächenrauheit RA wird dabei gemäss der Norm DIN EN ISO 3274 (Ausgabe vom 1.4.1998) gemessen. Die Oberflächen können insbesondere genarbt ausgebildet sein. Es hat sich gezeigt, dass die Wasserabscheidung aus der den Wasserkasten durchströmenden Luft dadurch verbessert ist.

Die Erfindung betrifft zudem ein Kraftfahrzeug mit einem erfindungsgemässen Wasserkasten. Der Wasserkasten ist an eine Luftansaugvorrichtung angeschlossen, mit der angesaugte Frischluft in den Fahrgastraum abgebbar ist. Die Luftansaugvorrichtung ist vorzugsweise ein Teil einer Klimaanlage und besitzt ein an sich übliches Gebläse.

Weitere vorteilhafte Merkmale ergeben sich aus den abhängigen Patentansprüchen, der nachfolgenden Beschreibung sowie der Zeichnung.

Ausführungsbeispiele der Erfindung werden nachfolgend anhand der Zeichnung näher erläutert. Es zeigen:
- Fig. 1: einen horizontalen Schnitt durch einen schematisch dargestellten erfindungsgemässen Wasserkasten,
- Fig. 2: einen vertikalen Schnitt durch den Wasserkasten entlang der Linie II-II der Fig. 1,
- Fig. 3: einen Schnitt durch den Wasserkasten entlang der Linie III-III der Fig. 1,
- Fig. 4: den Schnitt gemäss Fig. 1, wobei jedoch das Umlenkorgan nicht aktiv ist, die Frischluft somit im Wesentlichen ungehindert durch den Wasserkasten hindurch strömen kann,
- Fig. 5: einen horizontalen Schnitt durch einen schematisch dargestellten erfindungsgemässen Wasserkasten gemäss einer Variante,
- Fig. 6: einen horizontalen Schnitt durch einen schematisch dargestellten erfindungsgemässen Wasserkasten gemäss einer weiteren Variante,
- Fig. 7: den Schnitt gemäss Fig. 6, wobei das Umlenkorgan sich in einer nicht aktiven Position befindet,
- Fig. 8: einen horizontalen Schnitt durch einen schematisch dargestellten erfindungsgemässen Wasserkasten gemäss einer weiteren Variante,
- Fig. 9: einen Längsschnitt durch ein nur stark schematisch dargestelltes Kraftfahrzeug mit einem erfindungsgemässen Wasserkasten gemäss einer weiteren Variante,
- Fig. 10: einen Längsschnitt durch ein nur stark schematisch dargestelltes Kraftfahrzeug mit einem erfindungsgemässen Wasserkasten gemäss einer weiteren Variante, und
- Fig. 11: einen horizontalen Schnitt durch einen schematisch dargestellten erfindungsgemässen Wasserkasten gemäss einer weiteren Variante.

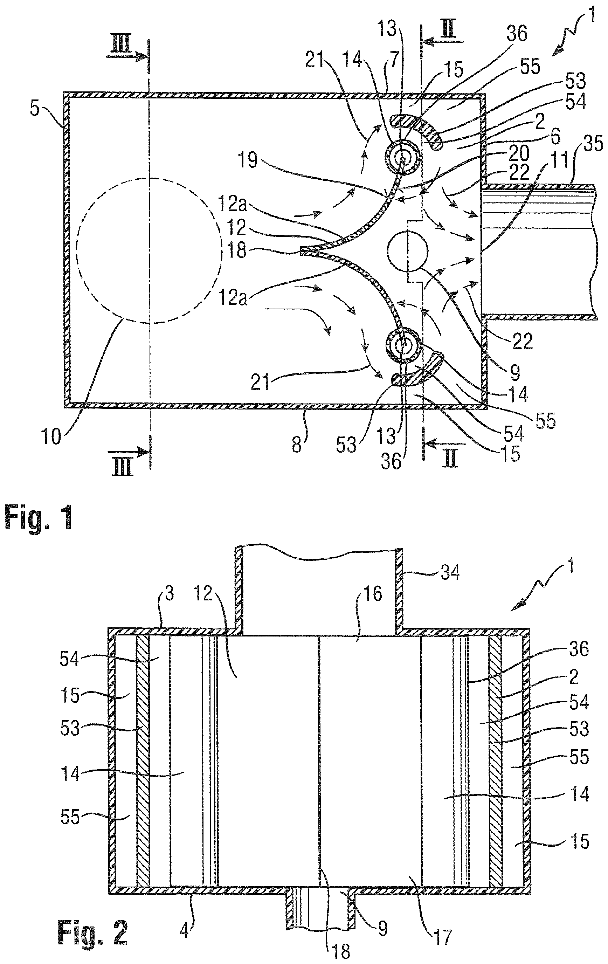

Der in den Fig. 1 bis 4 gezeigte Wasserkasten 1 besitzt eine Umlenkkammer 2, die eine Deckenwand 3, eine Bodenwand 4, eine Vorderwand 5, eine Rückwand 6 und zwei im Wesentlichen parallel zueinander verlaufende Seitenwände 7 und 8 aufweist. Die Umlenkkammer 2 hat also eine insgesamt quaderförmige Gestalt. Die Deckenwand 3 besitzt eine Lufteintrittsöffnung 10, an welcher angesaugte Frischluft in die Umlenkkammer 2 eingeleitet werden kann. Die Deckenwand 3 ist über ein Rohr 34 mit einer hier nicht gezeigten Ansaugöffnung verbunden, die beispielsweise unterhalb einer Windschutzscheibe angeordnet und mit einem hier nicht gezeigten Gitter abgedeckt ist. Das Rohr 34 kann, wie gezeigt, im Querschnitt rund sein. Der Querschnitt des Rohres 34, welches einen Einlassstutzen bildet, kann aber auch eine andere Form aufweisen, beispielsweise kann der Querschnitt rechteckig sein. Die Lufteintrittsöffnung 10 kann sich zwischen den Seitenwänden 7 und 8, wie in der Figur 1 ersichtlich, über einen Teil der Breite der Deckenwand 3 erstrecken. Selbstverständlich könnte sie sich auch über die gesamte Breite der Deckenwand 3 erstrecken, d.h. der Durchmesser der Lufteintrittsöffnung 10 wäre dann im Wesentlichen gleich gross wie die Breite der Deckenwand 3. In der Fig. 1 strömt die Luft somit senkrecht zur Bildebene von oben her durch die Lufteintrittsöffnung 10 in die Umlenkkammer 2 hinein..

Die angesaugte Frischluft durchströmt die Umlenkkammer 2 und verlässt diese durch eine Luftaustrittsöffnung 11, die in der Rückwand 6 angeordnet ist. Diese Luftaustrittsöffnung 11 ist über ein Rohr 35 mit einer hier nicht gezeigten und an sich üblichen Klimaanlage verbunden. Das Rohr 35 kann ebenfalls im Querschnitt kreisrund oder beispielsweise auch rechteckig sein. In der erwähnten und hier nicht gezeigten Klimaanlage befindet sich üblicherweise ein Gebläse zum Ansaugen der Frischluft, ein Luftfilter und Mittel zum Heizen und/oder Kühlen der Frischluft. Die Klimaanlage befindet sich bevorzugt im Fahrgastraum, während der Wasserkasten 1 sich beispielsweise im Motorraum befindet. Der Wasserkasten 1 ist wie ersichtlich im Wesentlichen geschlossen. Die ausströmende Luft strömt in Fig. 1 von links nach rechts. Die einströmende Luft und die ausströmende Luft strömen somit im Wesentlichen in senkrecht aufeinander stehenden Richtungen. Im eingebauten Zustand strömt die einströmende Luft in eine im Wesentlichen vertikale Richtung und die ausströmende Luft in eine im Wesentlichen horizontale Richtung. In der Umlenkkammer 2 wird die Frischluft, die an der Lufteintrittsöffnung 10 angesaugt wird, umgelenkt, so dass sie möglichst weitgehend Wasser abscheidet. Das Wasser kann als Schwallwasser und/oder als Tropfen anfallen. Die Umlenkkammer 2 kann somit von einer 2-Phasen Strömung durchströmt sein, was insbesondere bei regnerischem Wetter der Fall ist.

Zum Abscheiden des Wassers ist in der Bodenwand 4 gemäss Fig. 1 eine Wasserablauföffnung 9 angeordnet. Diese Wasserablauföffnung 9 befindet sich hinter einem Umlenkorgan 12. Die Bodenwand 4 kann eben oder auch konisch ausgebildet sein, so dass sich die Wasserablauföffnung 9 an der tiefsten Stelle der Bodenwand 4 befindet. Das Umlenkorgan 12 ist giebeldachförmig ausgebildet und erstreckt sich vertikal von der Deckenwand 3 zur Bodenwand 4. Das Umlenkorgan 12 liegt mit einer Oberseite 16 durchgehend an der Deckenwand 3 und mit einer Unterseite 17 durchgehend an der Bodenwand 4 an. Es besteht aus zwei im Wesentlichen spiegelsymmetrischen Teilen 12a, die sich in einer sich vertikal erstreckenden Frontkante 18 treffen. Die Teile 12a besitzen jeweils eine konkave Vorderseite 19 und eine konvexe Rückseite 20. Im Abstand zur Frontkante 18 besitzen die beiden Teile 12a jeweils eine sich ebenfalls vertikal erstreckende Seitenkante 13. An diesen Seitenkanten 13 ist jeweils eine sich in die vertikale Richtung erstreckende, wulstförmige Verdickung 14 vorgesehen. Die Verdickungen 14 werden in der vorliegenden Ausführungsvariante jeweils mittels eines mit einem Längsschlitz versehenen Rohres gebildet, wobei eines der Teile 12a mit der gesamten Seitenkante 13 in den Längsschlitz hineinragt und darin gehalten ist. Die Verdickungen 14 bilden mit ihren von den Teilen 12a abgewandten Aussenseiten jeweils eine gerundete, sich in die vertikale Richtung erstreckende Seitenkante 36 des Umlenkorgans 12.

Wird an der Lufteintrittsöffnung 10 Frischluft angesaugt, wird diese in der Umlenkkammer 2 im Bereich unterhalb der Lufteintrittsöffnung 10 in eine horizontale Richtung umgelenkt und strömt dann gemäss den Pfeilen 21 gegen das Umlenkorgan 12.An der Frontkante 18 des Umlenkorgans 12 wird die einströmende Frischluft im Wesentlichen zu gleichen Teilen und spiegelsymmetrisch aufgeteilt. Die beiden Teilströme umströmen etwa kreisförmig jeweils die entsprechende Verdickung 14 und gelangen hinter das Umlenkorgan 12. Schwallwasser wird ein erstes Mal im Bereich unterhalb der Lufteintrittsöffnung 10 sowie ein zweites Mal an dem Umlenkorgan 12 umgelenkt und gelangt schliesslich entlang der Bodenwand 4 in die Wasserablauföffnung 9. Bei der Umlenkung am Umlenkorgan 12 wird in an sich bekannter Weise der Coandä-Effekt wirksam. Die mit der Frischluft transportierten Wassertropfen und Aerosole treffen an die Vorderseiten 19 auf. Diese Wassertropfen fliessen entlang den Vorderseiten 19 nach unten und gelangen schliesslich zur Wasserablauföffnung 9, durch die sie die Umlenkkammer 2 verlassen. Die von Schwallwasser und weitgehend auch von Wassertropfen befreite Frischluft gelangt gemäss den Pfeilen 22 in die Luftaustrittsöffnung 11 und schliesslich zu der hier nicht gezeigten Klimaanlage.

Damit die Frischluft das Umlenkorgan 12 umströmen kann, ist zwischen den Seitenkanten 36 des Umlenkorgans 12, welche durch die Verdickungen 14 gebildet werden, und einer Seitenwand 7 bzw. Seitenwand 8 eine Strömungsöffnung 15 vorhanden. Der Abstand zwischen den beiden Verdickungen 14 ist wesentlich grösser als der Abstand der Verdickungen 14 zur nächstliegenden Seitenwand 8 bzw. 7. Vorzugsweise erstrecken sich diese Strömungsöffnungen 15 jeweils über die gesamte Höhe der Umlenkkammer 2 und somit jeweils von der Bodenwand 4 zur Deckenwand 3.

In den Strömungsöffnungen 15 ist zwischen der Seitenkante 36 und der Seitenwand 7 bzw. 8 jeweils eine Leitstruktur 53 vorgesehen. Die Leitstrukturen 53 erstrecken sich jeweils von der Bodenwand 4 bis zur Deckenwand 3 in die vertikale Richtung. In der horizontalen Querschnittsansicht (Figur 1) sind die Leitstrukturen 53 jeweils nierenförmig ausgestaltet und erstrecken sich über einen Winkelbereich von ca. 90° um die Seitenkante 36 herum, so dass Luft, welche die Umlenkkammer 2 durchströmt, von den Leitstrukturen 53 um die Seitenkanten 36 herum geleitet wird. Die im Querschnitt gekrümmte Form der Leitstrukturen 53 bewirkt insbesondere den Coandä-Effekt. Durch das Vorhandensein der Leitstrukturen 53 entstehen im Bereich der Seitenkanten 36 wesentlich weniger Luftverwirbelungen, wodurch der Druckabfall in Bezug auf die die Umlenkkammer 2 durchströmende Luft verringert ist.

Die Leitstrukturen 53 sind jeweils beabstandet von der Seitenkante 36 und der Seitenwand 7 bzw. 8 der Umlenkkammer 2 angeordnet. Dadurch unterteilen die Leitstrukturen 53 die Strömungsöffnung 15 jeweils in einen inneren Luftdurchlass 54 und einen äusseren Luftdurchlass 55. Der Strömungsquerschnitt des äusseren Luftdurchlasses 55 ist dabei grösser dimensioniert als derjenige des inneren Luftdurchlasses 54. Die Leitstrukturen 53 weisen jeweils eine zur Seitenkante 36 hin gewandte Innenfläche sowie eine zur Seitenwand 7 bzw. 8 hin gewandte, gleichsinnig wie die Innenfläche gekrümmte Aussenfläche auf. Die Innenflächen der Leitstrukturen 53 erstrecken sich jeweils im Wesentlichen parallel zu den Aussenflächen der Verdickungen 14.

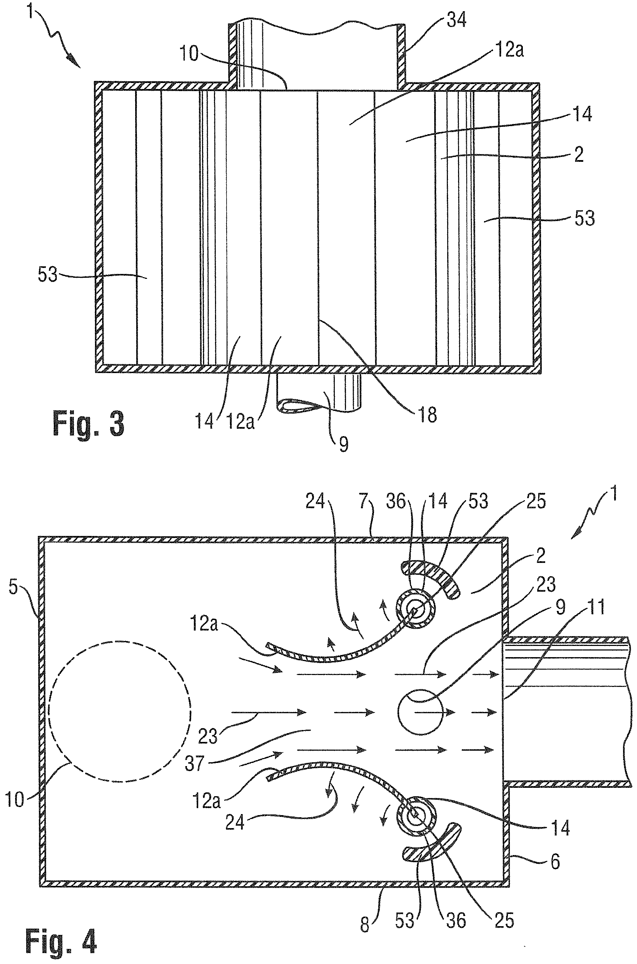

Die beiden Teile 12a können gemäss der Fig. 4 jeweils um eine Schwenkachse 25 schwenkbar sein. Die Teile 12a können insbesondere von der in Fig. 1 gezeigten ersten Stellung in die in Fig. 4 gezeigte zweite Stellung verschwenkt werden. In der in Fig. 4 gezeigten zweiten Stellung sind die beiden Teile 12a nach aussen geschwenkt, so dass sich zwischen diesen ein Durchlass 37 befindet. Dieser Durchlass 37 ermöglicht es, dass die angesaugte Frischluft gemäss den Pfeilen 23 im Wesentlichen ungehindert die Umlenkkammer 2 durchströmen kann. Das Verschwenken der Teile 12a in Richtung der Pfeile 24 wird vorzugsweise dadurch erreicht, dass die mit einem Längsschlitz versehenen Rohre, welche die Verdickungen 14 bilden und fest mit den Teilen 12a verbunden sind, um ihre jeweiligen Längsmittelachsen gedreht werden. Die beiden Teile 12a können somit ähnlich wie Flügeltüren verschwenkt werden. Das Verschwenken kann von Hand oder auch motorisch erfolgen. Die in Fig. 4 gezeigte Stellung der beiden Teile 12a ist dann vorgesehen, wenn die angesaugte Frischluft vergleichsweise trocken ist, eine Wasserabscheidung somit nicht notwendig ist. Das Verschwenken kann aufgrund eines hier nicht gezeigten Sensors, beispielsweise aufgrund eines Feuchtesensors erfolgen. Das Verschwenken erfolgt beispielsweise aufgrund eines gegebenen Wertes, beispielsweise eines vorgegebenen Feuchtigkeitsgehaltes der angesaugten Frischluft. Der Sensor kann beispielsweise in der Lufteintrittsöffnung 10 oder in der Luftaustrittsöffnung 11 angeordnet sein. Die Anordnung der Teile 12a gemäss Fig. 4 hat den wesentlichen Vorteil, dass der Luftwiderstand in der Umlenkkammer 2 wesentlich kleiner ist als bei der Anordnung gemäss den Fig. 1 bis 3. Da der Widerstand wesentlich kleiner ist, ist für das Ansaugen der Frischluft, beispielsweise durch ein elektrisch betriebenes Gebläse, entsprechend weniger Energie erforderlich.

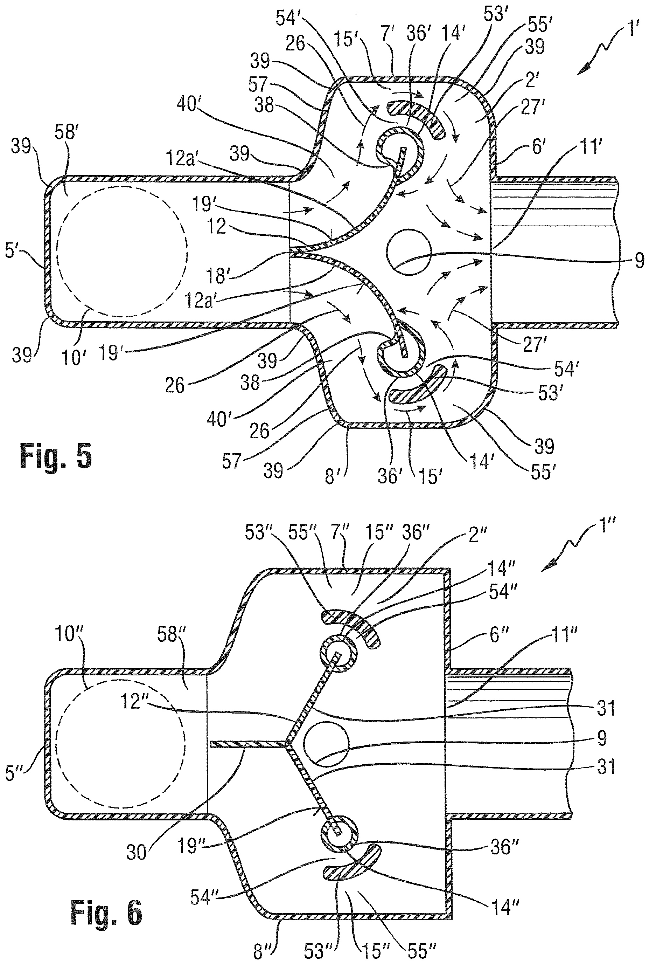

Die Fig. 5 zeigt einen Wasserkasten 1', der grundsätzlich ähnlich wie der Wasserkasten 1 ausgebildet ist. Im horizontalen Querschnitt ist die Umlenkkammer 2' des Wasserkastens 1' hier jedoch T-förmig ausgebildet, d.h. die Seitenwände 7' und 8' weisen jeweils einen Aufweitungsbereich 57 auf, in welchem sie einen im Wesentlichen nach vorne hin gewandten Abschnitt aufweisen. Die Umlenkkammer 2' weist einen Einlassbereich 58' auf, welcher zwischen der Lufteintrittsöffnung 10' und dem Umlenkorgan 12 angeordnet ist, und welcher eine sich senkrecht zur Strömungsrichtung erstreckende Breite aufweist, die nur geringfügig grösser ist, als der Durchmesser der Lufteintrittsöffnung 10'. Im Bereich des Umlenkorgans 12 ist die Breite der Umlenkkammer 2' ungefähr doppelt so gross wie im Einlassbereich 58. Im Einlassbereich 58 wird die durch die Lufteintrittsöffnung 10' einströmende Luft um ca. 90° von der vertikalen in die horizontale Richtung umgelenkt. Die hier vorgesehenen Verdickungen 14' bilden im Querschnitt gesehen jeweils eine Mulde 38, die sich jeweils an eine Vorderseite 19' anschliesst. Die im Querschnitt etwa tropfenförmig ausgebildeten Verdickungen 14' sind so ausgebildet, dass sie einen besonders hohen Coandä-Effekt bewirken. Schwallwasser und an der Vorderseite 19' abgelagerte Wassertropfen können somit besonders effizient gemäss den Pfeilen 26 das Umlenkorgan 12 umströmen und in die Wasserablauföffnung 9 geleitet werden. Die abgetrocknete Luft kann gemäss den Pfeilen 27' den Wasserkasten 1' verlassen. Der Wasserkasten 1' besitzt zudem wie ersichtlich gerundete Kanten 39, welche die nach vorne hin gewandten Wände, insbesondere die Vorderwand 5', mit den zu den Seiten hin gewandten Wänden, insbesondere den Seitenwänden 7' und 8', bzw. die Rückwand 6' mit der Seitenwand 7' bzw. 8'verbinden. Auch die Seitenwände 7' und 8' weisen in ihrem Aufweitungsbereich 57 jeweils gerundete Kanten 39 auf. Vorteilhaft ist auch das in die Lufteintrittsöffnung 10' mündende Rohr, welches einen Einlassstutzen bildet, via einen gerundet ausgebildeten Übergangsbereich mit der Deckenwand des Wasserkastens 1' verbunden. Diese gerundeten Kanten 39 vermindern ebenfalls den Widerstand in der Umlenkkammer 2' und verbessern zudem das Ableiten von Wasser in die Wasserablauföffnung 9. Die beiden Teile 12a' können hier ebenfalls verschwenkbar sein. Dies ist aber nicht zwingend. Die beiden Teile 12a' können hier somit auch fest montiert sein. Dies gilt ebenfalls für die Teile 12a des Wasserkastens 1. In den Strömungsöffnungen 15' ist auch hier jeweils eine Leitstruktur 53' vorgesehen, welche sich um die Seitenkante 36' des Umlenkorgans 12' herum erstreckt, so dass die Leitstrukturen 53' jeweils zumindest teilweise luftstromabwärts relativ zum Umlenkorgan 12' angeordnet sind. Die Leitstrukturen 53' unterteilen die Strömungsöffnungen 15' jeweils in einen inneren Luftdurchlass 54' und einen äusseren Luftdurchlass 55'. Die Teile 12a' begrenzen gemeinsam mit der Seitenwand 7' bzw. 8', insbesondere dem jeweiligen Aufweitungsbereich 57, jeweils einen Luftkanal 40'. Es ist somit ein erster Luftkanal 40' sowie ein getrennt davon verlaufender zweiter Luftkanal 40' vorgesehen, welche jeweils entlang ihrer Längserstreckung vom Einlassbereich 58' zur jeweiligen Strömungsöffnung 15' einen bezüglich Fläche und Form im Wesentlichen konstanten Strömungsquerschnitt aufweisen. Ebenso weisen die inneren Luftdurchlässe 54'entlang ihrer jeweiligen Längserstreckung jeweils einen bzgl. Form und Fläche im Wesentlichen konstanten Strömungsquerschnitt auf.

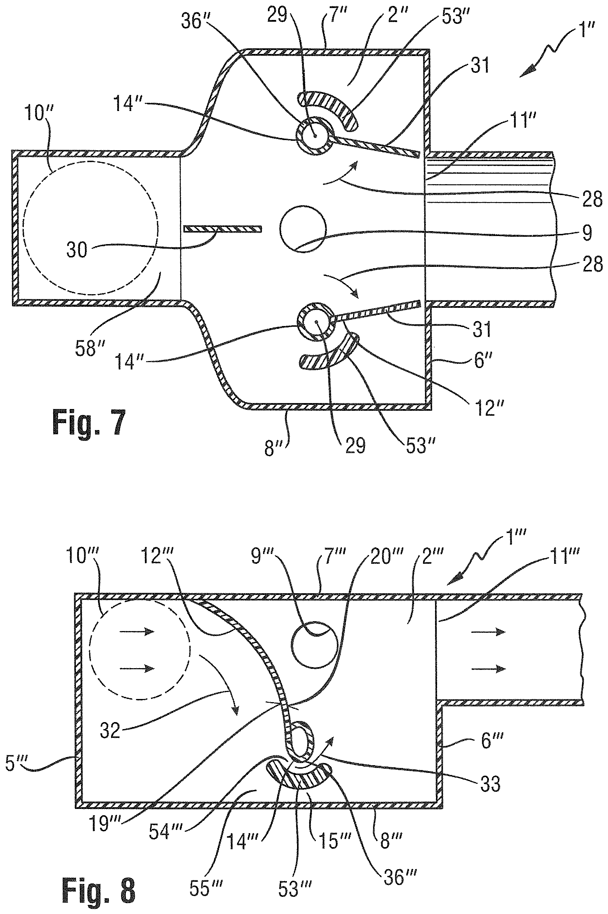

Der in den Fig. 6 und 7 gezeigte Wasserkasten 1" besitzt ein Umlenkorgan 12", das im Schnitt gesehen sternförmig ausgebildet ist. Das Umlenkorgan 12" besteht aus einer fest montierten Wand 30 und zwei begrenzt schwenkbaren wandförmigen Teilen 31. Die Teile 31 sind jeweils mit einem vertikal angeordneten Rohr verbunden, das eine mit einer Seitenkante 36" versehene Verdickung 14" des Umlenkorgans 12" bildet. Diese Rohre können jeweils zusammen mit dem Teil 31 von der in Fig. 6 gezeigten Stellung um eine Längsmittelachse 29 in die in Fig. 7 gezeigte Stellung verschwenkt werden. Diese Schwenkung ist in Fig. 7 mit den Pfeilen 28 angedeutet. Sind die Teile 31 gemäss Fig. 7 weggeschwenkt, so verlaufen sie im Wesentlichen parallel zur Strömungsrichtung. Bei der Anordnung gemäss Fig. 7 kann die Frischluft mit sehr geringem Widerstand von der Lufteintrittsöffnung 10" zur Luftaustrittsöffnung 11" gelangen. Die Stellung gemäss Fig. 7 ist auch hier bei vergleichsweise trockener Aussenluft vorgesehen. In den Strömungsöffnungen 15" ist jeweils zwischen der Seitenkante 36" und der Seitenwand 7" bzw. 8" eine Leitstruktur 53" angeordnet, welche sich um die jeweilige Seitenkante 36" herum erstreckt und die Strömungsöffnung 15" in einen inneren Luftdurchlass 54" und einen äusseren Luftdurchlass 55" unterteilt.

Der Wasserkasten 1'" gemäss Fig. 8 besitzt ein Umlenkorgan 12"', das sich von einer Seitenwand 7"' nach innen in eine Umlenkkammer 2'" erstreckt. Das Umlenkorgan 12"' besitzt eine konkave Vorderseite 19'" und eine konvexe Rückseite 20"'. An einer freien sich vertikal erstreckenden Kante ist am Umlenkorgan 12"' eine wulstförmige Verdickung 14"' angeordnet. Die konkave Vorderseite 19"' und die daran anschliessende Verdickung 14"' sind im Hinblick auf den Coandä-Effekt gerundet ausgebildet. Die Lufteintrittsöffnung 10'" ist angrenzend an die Seitenwand 7"' und unmittelbar neben der Stelle, wo das Umlenkorgan 2'" mit der Seitenwand 7'" verbunden ist, in der Deckenwand des Wasserkastens 1"' angeordnet. Wasser und Frischluft gelangen somit gemäss Pfeil 32 an der Vorderseite 19'" entlang zur Verdickung 14"' und umströmen diese gemäss Pfeil 33. Wasser und Frischluft durchströmen hierbei eine Strömungsöffnung 15'", die sich zwischen der durch die Verdickung 14'" gebildeten Seitenkante 36"' des Umlenkorgans 12'" und einer Seitenwand 8"' befindet. Schliesslich wird das abgeschiedene Wasser entlang der konvexen Rückseite 20'" zur Wasserablauföffnung 9'" geleitet. Die Frischluft gelangt schliesslich durch die Luftaustrittsöffnung 11"' zu der hier nicht gezeigten Klimaanlage. Die angesaugte Frischluft strömt in vertikaler Richtung von oben her durch die Lufteintrittsöffnung 10'" in die Umlenkkammer 2'" ein, wird in die horizontale Richtung umgelenkt und durchströmt die Umlenkkammer 2"' anschliessend im Wesentlichen horizontal. Das Umlenkorgan 12"' kann fest oder auch schwenkbar angeordnet sein. Um Verwirbelungen der Luft im Bereich der durch die Verdickung 14"' gebildeten Seitenkante 36'" zu vermeiden, ist in der Strömungsöffnung 15'" eine Leitstruktur 53'" angeordnet. Zusammen mit der Aussenfläche der Verdickung 14'" begrenzt diese einen inneren Luftdurchlass 54"' und zusammen mit der Seitenwand 8'" einen äusseren Luftdurchlass 55'".

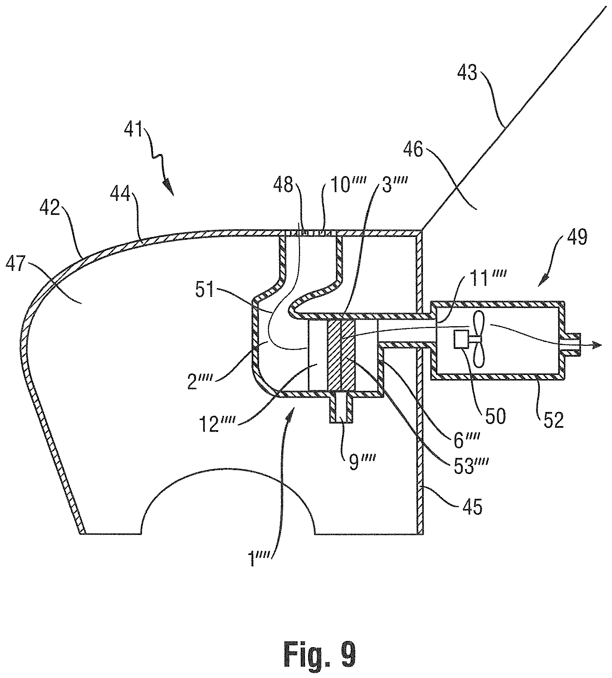

Das in Fig. 9 beispielhaft und stark schematisiert gezeigte Kraftfahrzeug 41 weist in üblicher Weise eine Karosserie 42, eine Windschutzscheibe 43 und eine Motorhaube 44 auf. In einer Öffnung der Motorhaube 44 ist ein Gitter 48 angeordnet. Eine Stirnwand 45 trennt den Innenraum des Kraftfahrzeuges 41 in einen Fahrgastraum 46 und einen Motorraum 47. Unterhalb der Motorhaube 44 ist im Motorraum 47 ein Wasserkasten 1"" angeordnet. Der Wasserkasten 1"" weist eine in der Deckenwand 3"" angeordnete Lufteintrittsöffnung 10"", eine in der Rückwand 6"" angeordnete Luftaustrittsöffnung 11"", eine Wasserablauföffnung 9"" sowie eine Umlenkkammer 2"" auf. In der Umlenkkammer 2"" ist ein Umlenkorgan 12"" sowie eine Leitstruktur 53"" angeordnet.

Der Wasserkasten 1"" erstreckt sich durch eine Öffnung in der Stirnwand 45 und ist mit einer im Fahrgastraum 46 angeordneten Luftansaugvorrichtung 49 verbunden, die in den Fahrgastraum 46 mündet. Im Gehäuse 52 der Luftansaugvorrichtung 49 ist ein Gebläse 50 angeordnet. Mittels des Gebläses 50 wird, wie durch den Pfeil 51 angedeutet, an der Lufteintrittsöffnung 10"" des Wasserkastens 1"" Luft angesaugt, durch den Wasserkasten 1"" sowie durch die Luftansaugvorrichtung 49 hindurch transportiert und in den Fahrgastraum abgegeben. Am Umlenkorgan 2"" wird die durch den Wasserkasten 1"" hindurchströmende Luft umgelenkt, so dass diese möglichst weitgehend Wasser abscheidet, welches den Wasserkasten 1"" über die Wasserablauföffnung 9"" verlässt. Aufgrund der Leitstruktur 53"" werden Luftverwirbelungen im Bereich des Umlenkorgans 2"" weitgehend vermieden. Ebenfalls über die Lufteintrittsöffnung 10"" in den Wasserkasten 1"" eintretendes Schwallwasser wird ebenfalls über die Wasserablauföffnung 9"" aus dem Wasserkasten 1"" abgeschieden. Zusätzlich können in der Luftansaugvorrichtung 49 eine hier nicht dargestellte Heizvorrichtung und/oder eine Kühlvorrichtung für die angesaugte Luft vorhanden sein, wie dies aus dem Stand der Technik an sich bekannt ist.

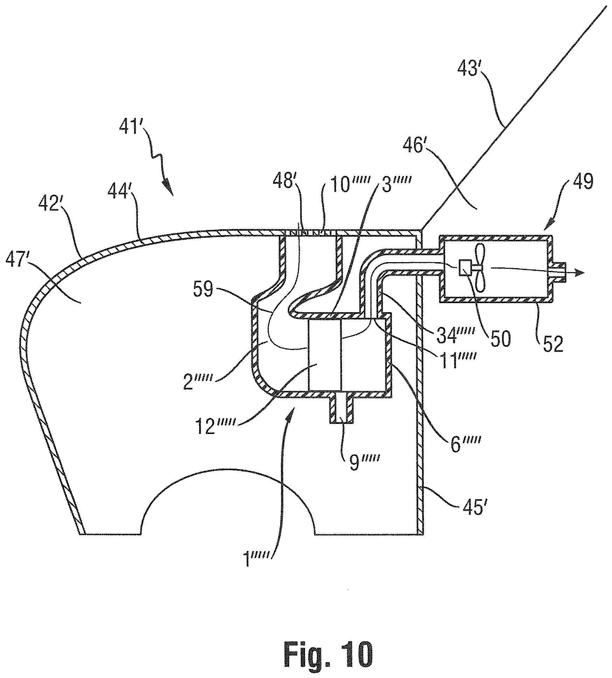

Das in der Figur 10 gezeigte Kraftfahrzeug 41' unterscheidet sich von dem in der Figur 9 gezeigten Kraftfahrzeug 41 insbesondere dadurch, dass der Wasserkasten 1''''' eine Luftaustrittsöffnung 11""' aufweist, welche anstatt in der Rückwand 6""' in der Deckenwand 3""' angeordnet ist. Durch den Pfeil 59 wird angedeutet, dass die Frischluft von oben her in die Umlenkkammer 2""' einströmt, diese in horizontaler Richtung durchströmt und schliesslich in vertikaler Richtung nach oben durch die Luftaustrittsöffnung 11""' ausströmt. Bei der in der Figur 10 gezeigten Variante ist keine Leitstruktur vorhanden. Genauso wie die Leitstruktur(en) bei den in den Varianten der übrigen Figuren jeweils entfallen könnte, könnte bei der in der Figur 10 gezeigten Variante aber zusätzlich eine Leitstruktur vorhanden sein, um die die Umlenkkammer 2""' durchströmende Luft um das Umlenkorgan 12"" herum zu lenken.

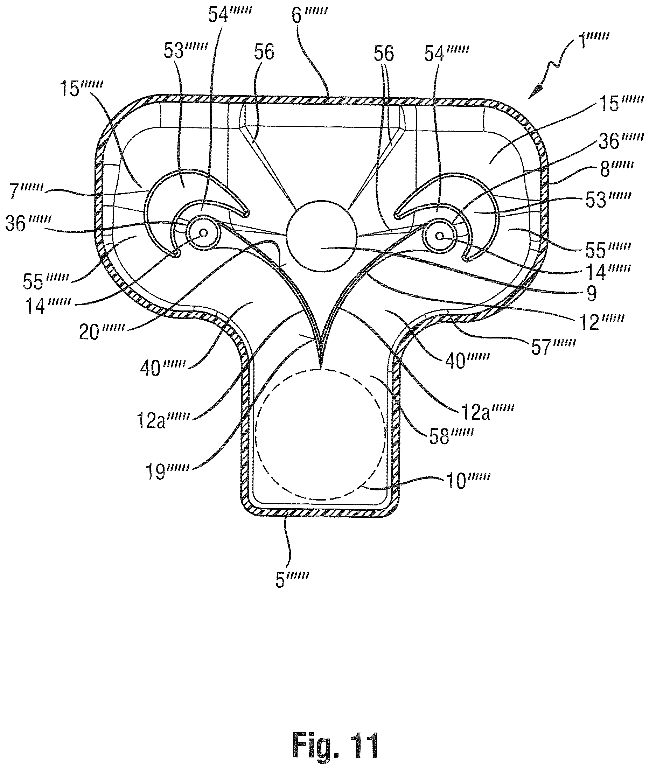

Der in der Figur 11 gezeigte Wasserkasten 1""" weist ein im Querschnitt spiegelsymmetrisches Umlenkorgan 12""" auf, bei welchem die Dicke der beiden Teile 12a""" jeweils zu den Seitenkanten 36""" hin kontinuierlich und um ein Vielfaches zunimmt. Die die Seitenkanten 36""" bildenden, wulstartigen Verdickungen 14""" weisen jeweils eine Aussenfläche mit einem Querschnitt auf, der über einen Winkelbereich von mehr als 180° kreisförmig ausgestaltet ist und fliessend, d.h. kantenfrei, in die Vorderseite 19""" bzw. die Rückseite 20""" der Teile 12a""" übergeht. Diese Form des Umlenkorgans 12""" in den Bereichen der Strömungsöffnungen 15""" ist besonders dazu geeignet, um bzgl. der am Umlenkorgan 12""" vorbeiströmenden Luft eine möglichst laminare Luftströmung zu erreichen. In den Strömungsöffnungen 15""" ist jeweils eine Leitstruktur 53""" angeordnet, welche sichelförmig ausgestaltet ist und sich um ca. 180° um die Seitenkante 36""" herum erstreckt. In dem luftstromabwärts zum Umlenkorgan 12""" angeordneten Bereich sind die beiden Leitstrukturen 53""" derart ausgestaltet, dass sie sich mit ihren jeweiligen Enden in Richtung zur Wasserablauföffnung 9 hin erstrecken, so dass sie die den Wasserkasten 1""" durchströmende Luft zur Wasserablauföffnung 9 hin leiten.

Die Übergangsbereiche des Wasserkastens 1""" zwischen der Vorderwand 5""" und der Seitenwand 7""" bzw. 8""", sowie zwischen der Seitenwand 7""" bzw. 8""" und der Rückwand 6""" sind jeweils gerundet ausgebildet. Ebenso sind die Seitenwände 7""" und 8""" in ihrem jeweiligen Aufweitungsbereich 57""' jeweils gerundet ausgebildet. Die Teile 12a""" begrenzen zusammen mit den Seitenwänden 7""" bzw. 8""", insbesondere den Aufweitungsbereichen 57""', jeweils einen Luftkanal 40""". Es sind somit zwei getrennt voneinander verlaufende Luftkanäle 40""" vorhanden, welche einen jeweils bzgl. Form und Fläche im Wesentlichen konstanten Querschnitt aufweisen, so dass in den Luftkanälen 40""" eine jeweils weitgehend laminare Luftströmung erzielt wird. Um auch in den Bereichen der Strömungsöffnungen 15""" Luftverwirbelungen jeweils möglichst zu vermeiden, weisen auch die inneren und äusseren Luftdurchlasse 54""" und 55""" zwischen den Leitstrukturen 53""" und der jeweiligen Aussenfläche der Verdickung 14""" bzw. zwischen den Leitstrukturen 53""" und der jeweiligen Seitenwand 7""" bzw. 8""" einen jeweils bzgl. Form und Fläche im Wesentlichen konstanten Querschnitt auf.

Auf der Oberseite der Bodenwand 4 des Wasserkastens 1""" sind mehrere Stege 56 angebracht, um Wasser, welches sich auf dem Boden der Umlenkkammer 2""" ansammelt, zur Wasserablauföffnung 9 zu leiten.

**BEZUGSZEICHENLISTE**

| | | | |
|---|---|---|---|
| 1 | Wasserkasten | 30 | Wand |
| 2 | Umlenkkammer | 31 | Teil |
| 3 | Deckenwand | 32 | Pfeil |
| 4 | Bodenwand | 33 | Pfeil |
| 5 | Vorderwand | 34 | Rohr |
| 6 | Rückwand | 35 | Rohr |
| 7 | Seitenwand | 36 | Seitenkante |
| 8 | Seitenwand | 37 | Durchlass |
| 9 | Wasserablauföffnung | 38 | Mulde |
| 10 | Lufteintrittsöffnung | 39 | Kanten |
| 11 | Luftaustrittsöffnung | 40 | Luftkanal |
| 12 | Umlenkorgan | 41 | Kraftfahrzeug |
| 12a | Teil | 42 | Karosserie |
| 13 | Seitenkante | 43 | Windschutzscheibe |
| 14 | Verdickung | 44 | Motorhaube |
| 15 | Strömungsöffnung | 45 | Stirnwand |
| 16 | Oberseite | 46 | Fahrgastraum |
| 17 | Unterseite | 47 | Motorraum |
| 18 | Frontkante | 48 | Gitter |
| 19 | Vorderseite | 49 | Luftansaugvorrichtung |
| 20 | Rückseite | 50 | Gebläse |
| 21 | Pfeil | 51 | Pfeil |
| 22 | Pfeil | 52 | Gehäuse |
| 23 | Pfeil | 53 | Leitstruktur |
| 24 | Pfeil | 54 | Innerer Luftdurchlass |
| 25 | Schwenkachse | 55 | Äusserer Luftdurchlass |
| 26 | Pfeil | 56 | Steg |
| 27 | Pfeil | 57 | Aufweitungsbereich |
| 28 | Pfeil | 58 | Einlassbereich |
| 29 | Schwenkachse | 59 | Pfeil |

## Patentansprüche

1. Wasserkasten für ein Kraftfahrzeug mit einer Umlenkkammer (2), die eine Deckenwand (3), eine Bodenwand (4) mit einer Wasserablauföffnung (9), eine Lufteintrittsöffnung (10) und eine Luftaustrittsöffnung (11) aufweist, mit einem in der Umlenkkammer (2) angeordneten Umlenkorgan (12), an dem durch die Lufteintrittsöffnung (10) einströmende und mit Wassertropfen beladene Luft umgelenkt wird, wobei sich das Umlenkorgan (12) im Wesentlichen von der Deckenwand (3) zur Bodenwand (4) erstreckt, wobei die Lufteintrittsöffnung (10) in der Deckenwand (3) und die Luftaustrittsöffnung (11) in der Deckenwand (3) und/oder in einer Rückwand (6) angeordnet sind, und wobei zwischen wenigstens einer Seitenwand (7, 8) der Umlenkkammer (2) und einer Seitenkante (36) des Umlenkorgans (12) eine Strömungsöffnung (15) angeordnet ist, **dadurch gekennzeichnet, dass** die Wasserablauföffnung (9) zwischen dem Umlenkorgan (12) und der Rückwand (6) angeordnet ist, so dass die beim jeweiligen Umlenken im Bereich der Lufteintrittsöffnung (10) sowie an der Vorderseite des Umlenkorgans (12) abgeschiedenen Wassertropfen zur Wasserablauföffnung (9) geleitet werden.

2. Wasserkasten nach Anspruch 1, **dadurch gekennzeichnet, dass** das Umlenkorgan (12) in Luftstromrichtung zwischen der Lufteintrittsöffnung (10) und der Luftaustrittsöffnung (11) angeordnet ist.

3. Wasserkasten nach einem der Ansprüche 1 oder 2, **dadurch gekennzeichnet, dass** das Umlenkorgan (12) eine zweite Seitenkante (13) aufweist, die mit einer zweiten Seitenwand (7, 8) der Umlenkkammer (2) eine zweite Strömungsöffnung (15) bildet.

4. Wasserkasten nach einem der vorhergehenden Ansprüche, **dadurch gekennzeichnet, dass** das Umlenkorgan (12") eine sich im Wesentlichen vertikal erstreckende Wand (30) aufweist, die an einer Vorderseite (19") des Umlenkorgans (12") angeordnet ist und die sich von dieser gegen die Vorderwand (5") hin erstreckt.

5. Wasserkasten nach einem der vorhergehenden Ansprüche, **dadurch gekennzeichnet, dass** die Bodenwand (4) so konisch ausgebildet ist, dass sich die Wasserablauföffnung (9) an einer tiefsten Stelle der Bodenwand (4) befindet.

6. Wasserkasten nach einem der vorhergehenden Ansprüche, **dadurch gekennzeichnet, dass** in der Umlenkkammer (2) im Bereich der Strömungsöffnung (15) zumindest eine Leitstruktur (53) vorgesehen ist, um Luft, welche die Umlenkkammer (2) durchströmt, um die Seitenkante (36) des Umlenkorgans (12) herum zu leiten.

7. Wasserkasten nach Anspruch 6, **dadurch gekennzeichnet, dass** sich die Leitstruktur (53) im Wesentlichen von der Deckenwand (3) zur Bodenwand (4) erstreckt.

8. Wasserkasten nach Anspruch 6 oder 7, **dadurch gekennzeichnet, dass** die Leitstruktur (53) im Querschnitt sichelförmig ist.

9. Wasserkasten nach einem der vorhergehenden Ansprüche, **dadurch gekennzeichnet, dass** das Umlenkorgan (12) giebeldach- oder pultdachförmig ausgebildet ist, wobei sich der First (18) im Wesentlichen vertikal erstreckt.

10. Wasserkasten nach einem der vorhergehenden Ansprüche, **dadurch gekennzeichnet, dass** die Umlenkkammer (2') wenigstens teilweise gerundete Kanten (39) aufweist.

11. Wasserkasten nach einem der vorhergehenden Ansprüche, **dadurch gekennzeichnet, dass** das Umlenkorgan (12) wenigstens ein Teil (12a) aufweist, das zwischen wenigstens einer ersten und einer zweiten Position verstellbar ist, wobei dieses Teil (12a) in der ersten Position zu Wasserabscheidung strömende Luft umlenkt und in der zweiten Position einen Durchgang freigibt, so dass die Luft möglichst ungehindert die Umlenkkammer (2) durchströmen kann.

12. Wasserkasten nach Anspruch 11, **dadurch gekennzeichnet, dass** das wenigstens eine Teil (12a) um eine im Wesentlichen vertikale Achse verschwenkbar ist, und dass vorzugsweise zwei Teile (12a) vorgesehen sind, die jeweils verschwenkbar sind.

13. Wasserkasten nach einem der vorhergehenden Ansprüche, **dadurch gekennzeichnet, dass** das Umlenkorgan (12) so ausgebildet ist, dass Wasser und/oder Luft nach dem Coandä-Effekt geleitet wird.

14. Kraftfahrzeug mit einem Wasserkasten (1) nach einem der vorhergehenden Ansprüche, **dadurch gekennzeichnet, dass** der Wasserkasten (1) an der Luftaustrittsöffnung (11) an eine Luftansaugvorrichtung (49) angeschlossen ist, mit der an der Lufteintrittsöffnung (10) angesaugte Frischluft in den Fahrgastraum (46) abgebbar ist.

## Claims

1. Water box for a motor vehicle with a deflection chamber (2) comprising a top wall (3), a bottom wall (4) with a water discharge opening (9), an air inlet opening (10) and an air outlet opening (11), with a deflection element (12) which is arranged in the deflection chamber (2) and on which air is deflected that flows in through the air inlet opening (19) and is loaded with water droplets, wherein the deflection element (12) essentially extends from the top wall (3) to the bottom wall (4), wherein the air inlet opening (10) is arranged in the top wall (3) and the air outlet opening (11) is arranged in the top wall (3) and/or in a back wall (6), and wherein a flow opening (15) is arranged between at least a side wall (7, 8) of the deflection chamber (2) and a side edge (36) of the deflection element (12), **characterized in that** the water discharge opening (9) is arranged between the deflection element (12) and the back wall (6), such that the water droplets, which, when being deflected in each case, are separated in the region of the air inlet opening (10) as well as on the front side of the deflection element (12), are guided to the water discharge opening (9).

2. Water box according to claim 1, **characterized in that** the deflection element (12) is arranged, in air flow direction, between the air inlet opening (10) and the air outlet opening (11).

3. Water box according to one of claims 1 or 2, **characterized in that** the deflection element (12) comprises a second side edge (13) which forms a second flow opening (15) with a second side wall (7, 8) of the deflection chamber (2).

4. Water box according to one of the preceding claims, **characterized in that** the deflection element (12") comprises an essentially vertically extending wall (30) which is arranged on a front side (19") of the deflection element (12") and which extends from the latter towards the front wall (5").

5. Water box according to one of the preceding claims, **characterized in that** the bottom wall (4) is conically designed in such a way that the water discharge opening is arranged at the lowermost position of the bottom wall (4).

6. Water box according to one of the preceding claims, **characterized in that** at least one guide structure (53) is provided in the deflection chamber (2) in the region of the flow opening (15), in order to guide air that flows through the deflection chamber (2) around the side edge (36) of the deflection element (12).

7. Water box according to claim 6, **characterized in that** the guide structure (53) extends essentially from the top wall (3) to the bottom wall (4).

8. Water box according to claim 6 or 7, **characterized in that** the guide structure (53) is crescent-shaped in cross-section.

9. Water box according to one of the preceding claims, **characterized in that** the deflection element (12) has the form of a gable roof or of a mono-pitched roof, wherein the ridge (18) extends essentially vertically.

10. Water box according to one of the preceding claims, **characterized in that** the deflection chamber (2') comprises at least partially rounded edges (39).

11. Water box according to one of the preceding claims, **characterized in that** the deflection element (12) comprises at least one part (12a) that is adjustable between at least a first and a second position, wherein in the first position this part (12a) deflects flowing air for water separation purposes and in the second position frees a passage such that the air can flow through the deflection chamber (2) in a manner as unhindered as possible.

12. Water box according to claim 11, **characterized in that** the at least one part (12a) can be pivoted around an essentially vertical axis and that preferably two parts (12a) are provided that can each be pivoted.

13. Water box according to one of the preceding claims, **characterized in that** the deflection element (12) is designed in such a way that water and/or air is guided according to the Coand 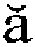 effect.

14. Motor vehicle with a water box (1) according to one of the preceding claims, **characterized in that** the water box (1) is coupled on the air outlet opening (11) to an air aspiration device (49) by which fresh air that is aspirated on the air inlet opening (10) can be brought into the passenger compartment.

## Revendications

1. Réservoir d'eau pour véhicule automobile ayant une chambre de déviation (2), qui présente une paroi supérieure (3), une paroi inférieure (4) ayant une ouverture de drainage d'eau (9), une ouverture d'entrée d'air (10) et une ouverture de sortie d'air (11), ayant un organe de déviation (12) disposé dans la chambre de déviation (2), au niveau duquel l'air chargé de gouttelettes d'eau et entrant à travers l'ouverture d'entrée d'air (10) est dévié, où l'organe de déviation (12) s'étend essentiellement depuis la paroi supérieure (3) vers la paroi inférieure (4), où l'ouverture d'entrée d'air (10) est disposée dans la paroi supérieure (3) et l'ouverture de sortie d'air (11) est disposée dans la paroi supérieure (3) et/ou dans une paroi postérieure (6), et où une ouverture d'écoulement (15) est disposée entre au moins une paroi latérale (7, 8) de la chambre de déviation (2) et une arête latérale (36) de l'organe de déviation (12), **caractérisée en ce que** l'ouverture de drainage d'eau (9) est disposée entre l'organe de déviation (12) et la paroi postérieure (6), de sorte que les gouttelettes d'eau séparées lors de la déviation respective dans le domaine de l'ouverture d'entrée d'air (10) ainsi qu'au niveau du côté antérieur de l'organe de déviation (12) sont guidées vers l'ouverture de drainage d'eau (9).

2. Réservoir d'eau selon la revendication 1, **caractérisé en ce que** l'organe de déviation (12) est disposé en direction de l'écoulement d'air entre l'ouverture d'entrée d'air (10) et l'ouverture de sortie d'air (11).

3. Réservoir d'eau selon une des revendications 1 ou 2, **caractérisé en ce que** l'organe de déviation (12) présente une deuxième arête latérale (13), qui forme une deuxième ouverture d'écoulement (15) avec une deuxième paroi latérale (7, 8) de la chambre de déviation (2).

4. Réservoir d'eau selon une des revendications précédentes, **caractérisé en ce que** l'organe de déviation (12 ") présente une paroi s'étendant essentiellement de manière verticale (30), qui est disposée au niveau d'un côté antérieur (19 ") de l'organe de déviation (12 ") et qui s'étend vers la paroi antérieure (5 ") à partir de celui-ci.

5. Réservoir d'eau selon une des revendications précédentes, **caractérisé en ce que** la paroi inférieure (4) est formée tellement conique que l'ouverture de drainage d'eau (9) se trouve à l'endroit le plus bas de la paroi inférieure (4).

6. Réservoir d'eau selon une des revendications précédentes, **caractérisé en ce qu'**au moins une structure de guidage (53) est prévue dans la chambre de déviation (2) dans le domaine de l'ouverture d'écoulement (15), afin de détourner l'air s'écoulant à travers la chambre de déviation (2) autour de l'arête latérale (36) de l'organe de déviation (12).

7. Réservoir d'eau selon la revendication 6, **caractérisé en ce que** la structure de guidage (53) s'étend essentiellement à partir de la paroi supérieure (3) vers la paroi inférieure (4).

8. Réservoir d'eau selon les revendications 6 ou 7, **caractérisé en ce que** la structure de guidage (53) a une forme de faucille en coupe transversale.

9. Réservoir d'eau selon une des revendications précédentes, **caractérisé en ce que** l'organe de déviation (12) est formé en forme de toit incliné ou toit en appentis, où la faite (18) s'étend essentiellement de manière verticale.

10. Réservoir d'eau selon une des revendications précédentes, **caractérisé en ce que** la chambre de déviation (2') présente des arêtes au moins partiellement arrondies (39).

11. Réservoir d'eau selon une des revendications précédentes, **caractérisé en ce que** l'organe de déviation (12) présente au moins une pièce (12a), qui peut être régulée entre au moins une première et une deuxième position, où cette pièce (12a) dévie l'air s'écoulant vers la séparation d'eau dans une première position et libère un passage dans une deuxième position, de sorte que l'eau puisse s'écouler de manière maximalement libre à travers la chambre de déviation (2) .

12. Réservoir d'eau selon la revendication 11, **caractérisé en ce que** au moins une pièce (12a) peut être pivotée autour d'un axe essentiellement vertical, et que préférablement deux pièces (12a) sont prévues, lesquelles respectivement peuvent être pivotées.

13. Réservoir d'eau selon une des revendications précédentes, **caractérisé en ce que** l'organe de déviation (12) est formé de sorte que l'eau et / ou l'air est guidé selon l'effet Coandǎ.

14. Véhicule automobile ayant d'un réservoir d'eau (1) selon une des revendications précédentes, **caractérisé en ce que** le réservoir d'eau (1) est raccordé au niveau de l'ouverture de sortie d'air (11) à un dispositif d'aspiration d'air (49), à l'aide duquel l'air frais aspiré au niveau de l'ouverture d'entrée d'air (10) peut être transmis vers l'habitacle (46).
